# EUROPEAN PATENT SPECIFICATION

(11) **EP 2 798 448 B1**
(45) Date of publication and mention of the grant of the patent: **10.05.2017**
(21) Application number: 12795775.1
(22) Date of filing: 26.11.2012
(51) Int. Cl.: G06F 3/048, H04N 21/475, H04N 21/485

(54) **AN ELECTRONIC DEVICE HAVING ON-SCREEN DISPLAY**
ELEKTRONISCHE VORRICHTUNG MIT EINER BILDSCHIRMANZEIGE
DISPOSITIF ÉLECTRONIQUE COMPORTANT UN AFFICHAGE À L'ÉCRAN

(30) Priority: 26.12.2011 TR 201112950
(43) Date of publication of application: 05.11.2014
(73) Proprietor: Arçelik Anonim Sirketi, 34950 Istanbul (TR)
(72) Inventor: AKKOC, Hakan, 34950 Istanbul (TR); OSMANOGLU, Ercan, 34950 Istanbul (TR); SAY, Ozgur, 34950 Istanbul (TR); AKBAS, Mursel, 34950 Istanbul (TR); ONCUL, Serkan, 34950 Istanbul (TR)
(86) International application number: PCT/EP2012/073625
(87) International publication number: WO 2013/098011

(56) References cited:
- WO-A1-2011/154437
- US-A1- 2002 018 069
- US-A1- 2002 070 957
- US-B1- 6 590 618

## Description

The present invention relates to an electronic device having an on screen display (OSD).

In the state of the art, on-screen displays are used in devices such as television, satellite receiver, photographic camera, video camera, etc that are used in adjusting the parameters that can be determined according to the preference of the user. Displays are displayed over the image on the screen according to the command the user gives when he/she desires to make the said adjustment and disappear by a command after the adjustment is completed.

In one of the state of the art embodiments, United States Patent Application No. US2010073564, an electronic device is described, of which the utilization efficiency is increased by adjusting the dimensions and position of the on-screen display.

In the prior art international application WO 2011/154437 a broadcast receiving device is disclosed having a user friendly on-screen display menu, wherein an on-screen display menu color is recorded for each different program type.

The prior art document n. US 2002/070957 a video display device is described, comprising a processor able to change the characteristics, such as the transparency, of a picture-in-picture display on an underlying video image.

The aim of the present invention is the realization of an electronic device that provides the user with flexible utilization opportunities in terms of on-screen displays.

In the electronic device realized in order to attain the aim of the present invention, explicated in the first claim and the respective claims thereof, while a parameter is being adjusted, the control unit, according to the user preference recorded in the storage means whether or not the on-screen display related to the adjusting of this parameter is displayed on the screen during the adjusting of the said parameter, controls the displaying of the on-screen display template on the screen, recorded in the storage means to be used for adjusting this parameter.

In an embodiment of the present invention, for all of the parameters that can be adjusted by the user, the factory setting recorded in the storage means and related to the user preference that determines whether or not the on-screen display related to the on-screen adjustment is displayed during the adjusting of the parameter is that the on-screen display is displayed.

In an embodiment of the present invention, during the production the user preference related to whether or not, when a command is given for adjusting a parameter, the on-screen display related to the adjusting of this parameter is displayed on the screen is left empty, and when the product is used for the first time, preference of the user is asked and thus this information is provided to be filled in by the user.

In an embodiment of the present invention, more than one user preference related to whether or not, when a command is given for adjusting a parameter, the on-screen display related to the adjusting of this parameter is displayed on the screen is recorded in the storage means. The user preferences recorded for the same parameter vary according to the genre and content of the program being watched. For example, user preferences are recorded in such manner that when the user sends a command for adjusting the volume while watching a movie, the on-screen display related to the adjusting of the volume is not displayed on the screen, on the other hand, when the user sends a command for adjusting the volume while watching a documentary, the on-screen display related to the adjusting of the volume is displayed on the screen. In this case, upon receiving a command for adjusting the volume, the control unit checks the genre of the program being watched and realizes the adjustment without displaying the on-screen display related to the adjusting of the volume on the screen if the genre is movie.

In a derivative of this embodiment, depending on whether or not the program being watched contains text box, two different user preferences related to whether or not, when a command is given for adjusting a parameter, the on-screen display related to the adjusting of this parameter is displayed on the screen are recorded in the storage means. In this case, upon receiving a command for adjusting a parameter, the control unit controls if the program being watched contains text box. If the program being watched contains text box, the control unit controls the displaying of the on-screen display on the screen according to the user preference related to the adjusting of the said parameter in case of text box presence.

In different embodiments of the present invention, the on-screen display is used in controlling the sound, display etc settings of the electronic device.

In different embodiment of the present invention, the electronic device can be a television, a video camera or a photographic camera.

The electronic device realized in order to attain the aim of the present invention is illustrated in the attached figures, where:

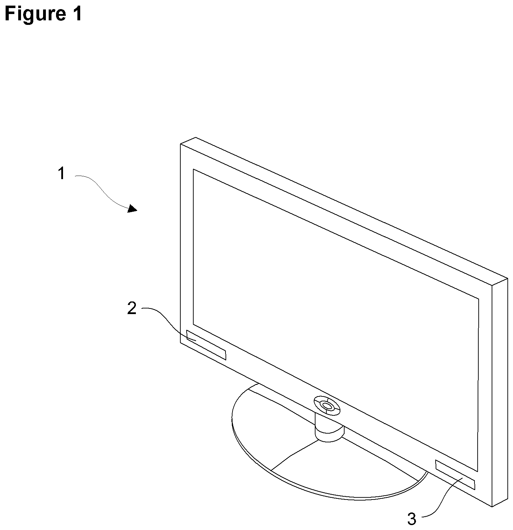

Figure 1 - is the schematic view of an electronic device.

The elements illustrated in the figures are numbered as follows:
1. Electronic device
2. Storage means
3. Control unit

The abbreviations related to the supplementary elements used in explicating the present invention are given below:
Pₙ: Parameter that can be determined according to the user preference
UPPₙ: User preference related to whether or not, when a command is given by the user for adjusting a parameter (Pₙ), the on-screen display related to the adjusting of this parameter (Pₙ) is displayed on the screen

The electronic device (1) comprises at least one storage means (2) wherein at least one on-screen display template used for adjusting the parameters (P₁, P₂, P₃, P₄, ...) that can be determined according to the user preference is recorded.

In the storage means (2) disposed in the electronic device (1) of the present invention, the user preference (UPP₁) related to whether or not, when a command is given for adjusting a parameter (P₁), the on-screen display related to the adjusting of this parameter (P₁) is displayed on the screen is recorded as well. The electronic device (1) of the present invention comprises a control unit (3) that controls whether or not the on-screen display is displayed on the screen according to the user preference (UPP₁) related to whether or not, when a command is given for adjusting a parameter (P₁), the on-screen display related to the adjusting of this parameter (P₁) is displayed on the screen.(Figure 1)

When the user sends a command for adjusting a parameter (P₁), the control unit (3) controls the user preference (UPP₁) recorded in the storage means (2) and related to the adjusting of the said parameter (P₁). If the user preference (UPP₁) recorded in the storage means (2) and related to the adjusting of the said parameter (P₁) is that the on-screen display is displayed, the control unit (3) provides the displaying of the on-screen display template related to the adjusting of the said parameter (P₁). However, if the user preference (UPP₁) recorded in the storage means (2) and related to the adjusting of the said parameter (P₁) is that the on-screen display is not displayed, the on-screen display template related to the adjusting of the said parameter (P₁) is not displayed on the screen while the adjusting of the said parameter (P₁) is realized.

In an embodiment of the present invention, the user preferences (UPP₁, UPP₂, UPP₃, UPP₄, ...) related to whether or not, when a command is given for adjusting a parameter (P₁), the on-screen display related to the adjusting of this parameter (P₁) is displayed on the screen are recorded for all the parameters (P₁, P₂, P₃, P₄, ...) in the storage means (2) during the production. Thus, when a command is given for adjusting a parameter (P₁ ), the on-screen display related to the adjusting of this parameter (P₁) is displayed on the screen in case the user prefers otherwise.

In another embodiment of the present invention, in the first use of the electronic device (1), the control unit (3) asks the user his/her preference (UPP₁) related to whether or not, when a command is given for adjusting a parameter (P₁), the on-screen display related to the adjusting of this parameter (P₁) is displayed on the screen. Thus, during the first use of the electronic device (1), along with other settings and preferences, the user preference (UPP₁) related to whether or not, when a command is given for adjusting a parameter (P₁), the on-screen display related to the adjusting of this parameter (P₁) is displayed on the screen is also determined.

In an embodiment of the present invention, the user preference (UPP₁) related to whether or not, when a command is given for adjusting a parameter (P₁), the on-screen display related to the adjusting of this parameter (P₁) is displayed on the screen is recorded in the storage means (2) in more than one version depending on the genre and content of the program being watched when the command is given. Thus, the user can make different user preferences (UPP₁) depending on the genre and content of the program being watched, thereby a flexible watching experience is provided for the user.

In a derivative of this embodiment, the user preference (UPP₁) related to whether or not, when a command is given for adjusting a parameter (P₁), the on-screen display related to the adjusting of this parameter (P₁) is displayed on the screen is recorded in the storage means (2) in two versions (UPP_{1sub}, UPP_{1nosub}) depending on whether or not the program being watched when the command is given contains text box. Thus, for example while watching a subtitled program, the user is provided with the opportunity of preventing the displaying of the on-screen displays that prevents the subtitles from being viewed by aligning with the subtitle.

In an embodiment of the present invention, the on-screen display is a settings menu used for adjusting the audio, video, etc. settings of the electronic device (1)

In different embodiments of the present invention, the electronic device (1) can be a television, a video camera or a photographic camera.

By means of the present invention, while making adjustments in the parameters (P₁, P₂, P₃, P₄, ...) that can be determined according to the user preference, the user can also make the decision about the displaying of the on-screen display according to his/her preference, thereby a flexible use opportunity is provided for the user.

It is to be understood that the present invention is not limited by the embodiments disclosed above and a person skilled in the art can easily introduce different embodiments. These should be considered within the scope of the protection postulated by the claims of the present invention.

## Claims

1. An electronic device (1) comprising at least one storage means (2) wherein at least one on-screen display template used for adjusting the parameters (P1, P2 , P3, P4, ... ) that can be determined according to the user preference is recorded,
**characterized by**
- the storage means (2) wherein the user preference (UPP1) related to whether or not, when a command is given for adjusting a parameter (P1), the on-screen display related to the adjusting of this parameter (P1) is displayed on the screen is recorded in more than one version depending on the genre of the program being watched when the command is given and in two versions (UPP1sub, UPP1 nosub) depending on whether or not the program being watched when the command is given contains text box,
and
- a control unit (3), when a command is given for adjusting a parameter (P1), that decides whether or not the on-screen display related to the adjusting of this parameter (P1) is displayed on the screen according to the user preference (UPP1), and that adjusts the parameter (P₁).

2. An electronic device (1) as in Claim 1, **characterized by** the storage means (2) wherein the user preferences (UPP1, UPP2, UPP3, UPP4, ... ) related to whether or not, when a command is given for adjusting a parameter (P1), the on-screen display related to the adjusting of this parameter (P1) is displayed on the screen are recorded for all the parameters (P1, P2, P3, P4, ... ) during the production.

3. An electronic device (1) as in Claim 1, **characterized by** the control unit (3) that asks, during the first use, the user his/her preference (UPP1) related to whether or not, when a command is given for adjusting a parameter (P1), the on-screen display related to the adjusting of this parameter (P1) is displayed on the screen.

4. An electronic device (1) as in any one of the above Claims, which is a television.

5. An electronic device (1) as in any one of the Claims 1 to 3, which is a video camera.

6. An electronic device (1) as in any one of the Claims 1 to 3, which is a photographic camera.

## Patentansprüche

1. Elektronische Vorrichtung (1), umfassend wenigstens sein Speichermittel (2), auf dem wenigstens eine Bildschirmanzeigevorlage, die zum Einstellen der gemäß dem Benutzerwunsch bestimmbaren Parameter (P₁, P2 , P3, P4, ... ) dient, aufgezeichnet ist, **dadurch gekennzeichnet, dass**
- beim dem Speichermittel (2) der Benutzerwunsch (UPP₁) hinsichtlich dessen, ob bei Erteilung eines Befehls zum Einstellen eines Parameter (P₁) die Bildschirmanzeige im Zusammenhang mit dem Einstellen dieses Parameters (P₁) auf dem Bildschirm angezeigt werden soll, abhängig von dem Genre des betrachteten Programms in mehr als einer Version aufgezeichnet wird, wenn der Befehl erteilt wird, und in zwei Versionen (UPP1sub, UPP1nosub) abhängig davon, ob das beim Erteilen des Befehls betrachtete Programm ein Textfeld enthält,
und
- eine Steuereinheit (3) beim Erteilen eines Befehls zum Einstellen eines Parameters (P1) gemäß dem Benutzerwunsch (UPP1) entscheidet, ob die Bildschirmanzeige im Zusammenhang mit dem Einstellen dieses Parameters (P₁) auf dem Bildschirm angezeigt wird, und den Parameter (P1) einstellt.

2. Elektronische Vorrichtung (1) nach Anspruch 1, **dadurch gekennzeichnet, dass** bei dem Speichermittel (2) die Benutzerwünsche (UPP1, UPP2, UPP3, UPP4, ... ) hinsichtlich dessen, ob bei Erteilung eines Befehls zum Einstellen eines Parameters (P₁) die Bildschirmanzeige im Zusammenhang mit dem Einstellen dieses Parameters (P₁) auf dem Bildschirm angezeigt werden soll, für alle Parameter (P₁, P2, P3, P4, ... ) während der Herstellung aufgezeichnet werden.

3. Elektronische Vorrichtung (1) nach Anspruch 1, **dadurch gekennzeichnet, dass** die Steuereinheit (3) während des ersten Gebrauchs vom Benutzer seinen Wunsch (UPP₁) hinsichtlich dessen erfragt, ob bei Erteilung eines Befehls zum Einstellen eines Parameters (P₁) die Bildschirmanzeige im Zusammenhang mit dem Einstellen dieses Parameters (P₁) auf dem Bildschirm angezeigt werden soll.

4. Elektronische Vorrichtung (1) nach einem der vorangehenden Ansprüche, die ein Fernsehgerät ist.

5. Elektronische Vorrichtung (1) nach einem der Ansprüche 1 bis 3, die eine Videokamera ist.

6. Elektronische Vorrichtung (1) nach einem der Ansprüche 1 bis 3, die eine Fotokamera ist.

## Revendications

1. Un dispositif électronique (1) comprenant au moins un moyen de stockage (2) où au moins un gabarit d'affichage à l'écran utilisé pour ajuster les paramètres (P1, P2 , P3, P4, ... ) qui peuvent être déterminés en fonction des préférences de l'utilisateur est enregistré,
**caractérisé par**
- le moyen de stockage (2) où la préférence de l'utilisateur (UPP₁) qui est associée si ou non, lorsqu'une commande est donnée pour ajuster un paramètre (P1), l'affichage à l'écran associé à l'ajustement de ce paramètre (P₁) est affiché sur l'écran est enregistré dans plus d'une version en fonction du genre du programme regardé lorsque la commande est donnée et dans deux versions (UPP1sub, UPP1nosub) en fonction de si ou non le programme regardé lorsque la commande est donnée contient une fenêtre de texte,
et
- une unité de commande (3), lorsqu'une commande est donnée pour ajuster un paramètre (P1), qui décide si ou non l'affichage à l'écran associé à l'ajustement de ce paramètre (P1) est affiché sur l'écran en fonction de la préférence de l'utilisateur (UPP1), et qui ajuste le paramètre (P1).

2. Un dispositif électronique (1) selon la Revendication 1, **caractérisé par** le moyen de stockage (2) où les préférences de l'utilisateur (UPP1, UPP2, UPP3, UPP4, ... ) associées à si ou non, lorsqu'une commande est donnée pour ajuster un paramètre (P1), l'affichage à l'écran associé à l'ajustement de ce paramètre (P₁) est affiché sur l'écran sont enregistrées pour tous les paramètres (P1, P2, P3, P4, ... ) pendant la fabrication.

3. Un dispositif électronique (1) selon la Revendication 1, **caractérisé par** l'unité de commande (3) qui demande, lors de la première utilisation, à l'utilisateur sa préférence (UPP1) associée à si ou non, lorsqu'une commande est donnée pour ajuster un paramètre (P1), l'affichage à l'écran associé à l'ajustement de ce paramètre (P₁) est affiché sur l'écran.

4. Un dispositif électronique (1) selon l'une quelconque des revendications précédentes, qui est un télévision.

5. Un dispositif électronique (1) selon l'une quelconque des revendications de 1 à 3, qui est une caméra vidéo.

6. Un dispositif électronique (1) selon l'une quelconque des revendications de 1 à 3, qui est un appareil photographique.
